# EUROPEAN PATENT APPLICATION

(11) **EP 2 386 392 A2**
(43) Date of publication of application: **16.11.2011**
(21) Application number: 11165237.6
(22) Date of filing: 09.05.2011
(51) Int. Cl.: B27L 7/00, B27B 31/00, B65G 47/04, B66F 7/00

(54) **Lifting device for a wood splitting machine**

(30) Priority: 14.05.2010 FI 20105533
(71) Applicant: Reikälevy Oy, ., 62375 Ylihärmä (FI)
(72) Inventor: Mäki-Haapoja, Matti, 62375, Ylihärmä (FI)
(74) Representative: Äkräs, Tapio Juhani

(57) **Abstract**

The invention relates to a device for a wood splitting machine comprising a body (1-50), feeding plane (1-22c), horizontal beam (1-10, 2-10, 3-10, 5-10, 6-10), bottom beam (1-2a, 2-2, 3-2, 4-2), first lifting arm (1-6a) and second lifting arm (1-6b), first swing (1-16a, 1-16b) and second swing (1-16c, 1-16d), cylinder member (1-12a, 1-12b, 2-12, 3-12b, 3-12e, 4-12a, 4-12b, 4-12e, 7-12a, 7-12b, 7-12e, 7-12f), and feeding table support (1-18a, 1-18b, 2-18c, 3-18a, 3-18b, 7-18a, 7-18b).

## Description

### Field of the invention

The invention relates to a wood splitting machine and especially to lifting wood onto the feeding table of the wood splitting machine.

### Background of the invention

A wood splitting machine or splitter is a machine for making fire-wood for private house, summer cottage, and farm use. The machine receives tree trunks and makes them into large logs for fireplaces or small logs for stoves. Before cutting the trunk into cut-to-size pieces and splitting the cut pieces into logs, for example, the trunk must be lifted from the ground to a conveyor that transfers the trunk to a cutter and on to a splitter and discharger.

In prior-art lifting of wood from the ground, the fork of the lifting device grabs the wood to be lifted and lifts it on to the conveyor. However, during lifting the fork and lifting device are in a vertically swinging motion that causes danger to the operator of the device. In other known solutions, a lifting lever mechanism operates with two cylinders, the first being used to lift the tree trunk from the ground to a required height and the second to lift the lifting lever mechanism to its transport position.

### Brief description of the invention

It is thus an object of the invention to develop a method and an apparatus implementing the method in such a manner that the above-mentioned problems are solved. The object of the invention is achieved by a system which is characterized by what is disclosed in the independent claims. Preferred embodiments of the invention are disclosed in the dependent claims.

The invention is based on using two different lifting arm groups that move in different directions during lifting and one cylinder that provides both a lifting motion and the lifting of the lifting lever mechanism to its transport position.

The method and system of the invention provides the advantage that wood is lifted simply, efficiently, and substantially vertically from the ground to the feeding table, and the system and method only need one actuator for lifting and transferring the lifting device and feeding table from their work positions to their transport positions.

### Brief description of the figures

The invention will now be described in greater detail by means of preferred embodiments and with reference to the accompanying drawings, in which:
Figure 1 is a front view of the feeding table with the lifting device down;
Figure 2 shows the feeding table from the incoming direction of the wood and with the lifting device down;
Figure 3 shows the feeding table from the incoming direction of the wood and with the lifting device up;
Figure 4 is a front view of the feeding table with the lifting device up;
Figure 5 is a partial cut of the feeding table with the lifting device down;
Figure 6 is a partial cut of the feeding table with the lifting device in its up position;
Figure 7 shows the feeding table in its transport position.

### Detailed description of the invention

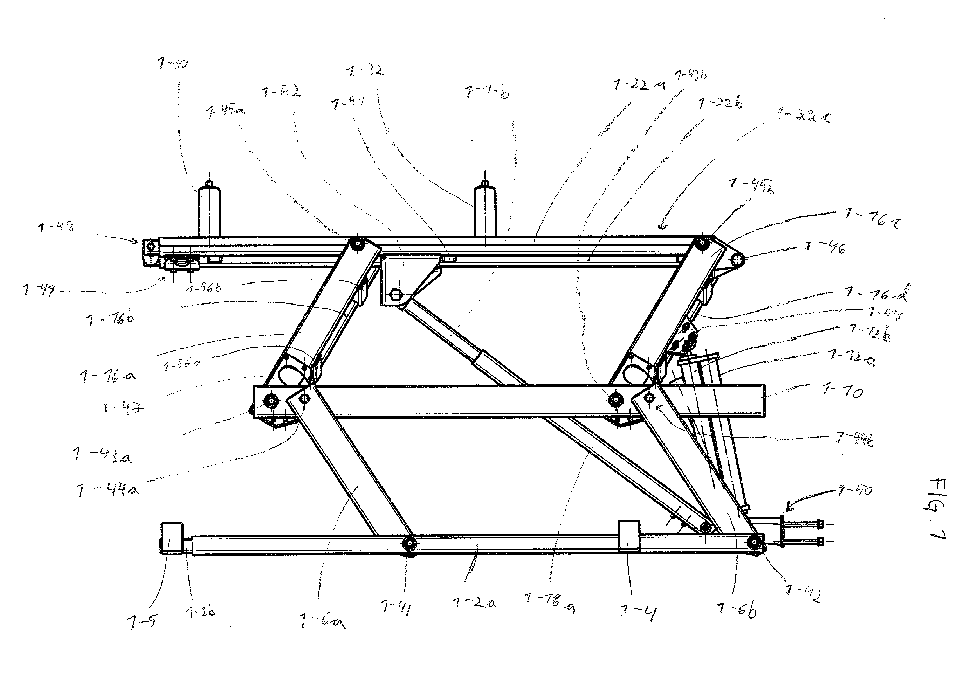

The device for a wood splitting machine of the invention and its preferred embodiments can be divided into a lifting device and feeding table. The lifting device comprises the means with which wood can be lifted from the ground to the feeding table, from a first level to a second level. The feeding table may comprise for instance means for receiving wood and passing it on, and support means of the table. At the front end of the entire wood splitting machine or chopping machine unit, there is a lifting device and feeding table with which tree trunks are lifted from the ground to rest beside the conveyor or belt of the feeding table or onto the conveyor or belt so that it can feed the trunks on for processing. Figure 1 shows the lifting device and feeding table of the invention and its preferred embodiments from the front. In Figure 1, the lifting device of the feeding table is in its down position.

In Figure 1, the lifting fork of the device, lifting device or feeding table comprises a bottom beam 1-2a that forms the body of the fork, and arms 1-4, 1-5 of the fork that are connected to the bottom beam. For instance, the arms may have ramps, plates or rolls rotating in only one direction that facilitate the pushing of the tree trunk into the fork and possibly prevent the trunk from falling. During lifting, the bottom beam remains substantially horizontal and the arms of the bottom bean support the tree trunk. The arms may also have holders, stoppers, or other hindrances to stop the tree trunk from falling during lifting. The bottom beam may also have a telescopic extension 1-2b with which the length of the bottom beam may be adapted to the length of the tree trunk. In the transport position, the extension 1-2b of the bottom beam may be pushed inside the body 1-2a of the bottom beam and the extension may be locked by a latch, for example, during transport.

The bottom beam is arranged on two lifting arms 1-6a, 1-6b in such a manner that the bottom beam comprises two points for a joint, joint pin or bushing 1-41, 1-42 that support the bottom beam. The fastening point may have just a hole and through-bolt or pin. When the lifting arms turn into a horizontal position, said fulcrums act as support points for the bottom beam and keep the bottom beam in a substantially vertical position. When moving from a first position to a second position, from the bottom position to the top position, from the position to receive the wood to the position to release the wood, the bottom beam is arranged to remain parallel to the feeding plane. Thus, the bottom beam can be connected rotatably from its first point 1-41 to a first end of the first lifting arm 1-6a and from its second point 1-42 to a first end of the second lifting arm 1-6b, in which the first point 1-41 and second point 1-42 are at a distance from each other.

At their second ends, the lifting arms are arranged to a horizontal beam 1-10. The first lifting arm 1-6a is connected rotatably from its first end to the bottom beam and from its second end to the horizontal beam, and the second lifting arm is connected rotatably from its first end to the bottom beam and from its second end to the horizontal beam.

The bottom beam is operationally connected at its first point 1-43a to a first end of a first swing 1-16a, 1-16b and at its second point 1-44a to a second end of the first lifting arm 1-6a, and the horizontal beam is operationally connected at its third point 1-43b to a first end of a second swing 1-16c, 1-16d and at its fourth point 1-44b to the second end of the second lifting arm 1-6b, wherein the first point 1-43a and third point 1-43b are at a distance from each other and the second point 1-44a and fourth point 1-44b are at a distance from each other. In addition, the third point is between the second and fourth points, close to the fourth point, for instance. The first point is outside the area between the second and fourth points. In addition, the first lifting arm and first swing and/or second lifting arm and second swing are operationally interconnected. The fulcrums 1-43a, 1-44a, 1-43b, 1-44b, through which the swings and lifting arms are rotatably connected, may substantially be on the same straight line.

In Figure 1, the horizontal beam has two swing elements arranged thereto, but it is also possible to arrange more swing elements than that to the horizontal beam. The swing elements comprise two arms 1-16a, 1-16b (1-16c, 1-16d, respectively) and two support elements 1-56a, 1-56b between the arms. The arrangement of the horizontal beam to the swing element is done through the joint, joint pin or sleeve 1-43a, 1-43b. The swing can turn around said fulcrum during lifting, for example.

As can be seen in Figure 1, the first swing 1-16a, 1-16b is connected rotatably from its first end to the horizontal beam and from its second end to the feeding plane 1-22c, and the second swing 1-16c, 1-16d is connected rotatably from its first end to the horizontal beam and from its second end to the feeding plane.

Reference numbers 1-44a, 1-44b depict a fixed pin that goes through the first and second lifting arms and horizontal beam, respectively. At the pin, on the other side of the horizontal beam, there is a first cogwheel member, lifting arm cogwheel member, and at the joint of the swing, there is a second cogwheel member, swing cogwheel member. The cogwheel members are arranged to engage each other. The movement of the cogwheel members forces the lifting arms to rise upward toward the feeding plane 1-22c of the feeding table during lifting. The movement of the lifting arms forces the fork to rise and lift the material in the fork upward.

Because the lifting arms and swings turn into different directions during lifting, both the horizontal and bottom beams and fork remain substantially horizontal during the entire lift. When the bottom beam and fork are lowered from the top position to the bottom position for receiving new wood, for example, the lifting arms and swings move into directions that are opposite to their direction during lifting.

Reference number 1-47 depicts a protective structure of the cogwheel members.

After the wood has been lifted up, it can be transferred to a belt or conveyor by rolling it from the fork to the belt, for instance. By means of the belt, the wood can be fed from the feeding table to the next block of the wood splitting machine or other machine for the next step following the lifting step. The feeding table belt, conveyor mat, conveyor, chain, or endless belt can be made up of one or more parts.

The feeding table may comprise a table frame 1-22a, 1-22-b, table support beams 1-58, feeding table plane 1-22c, and conveyor mat that may run on the table plane, for instance. Arranging the feeding table to the lifting device or swing element is done through a joint, joint pin, or sleeve at the third point 1-45a, to which the second end of the first swing is connected rotatably, and at the fourth point 1-45b, to which the second end of the second swing is connected rotatably. The swing can turn around said fulcrum during lifting, for example.

It is possible to arrange to the feeding table or in connection therewith one or more horizontal or vertical rotating rolls that move or help move wood to the belt or from the belt. The roll may be arranged in a telescopic arm, and the length of the arm may be adjusted to move wood of different sizes. The length of the telescopic part may be 500 mm, for example. To facilitate safe transfer of material, one or more rotating vertical rolls 1-30, 1-32 may be arranged to the feeding table or in connection therewith. Instead or in addition to it, one or more plate elements can be arranged to the feeding table or in connection therewith to move material. This way, it is possible to make sure that wood cannot fall behind the feeding table.

One or more pressure rolls 1-49 or turnover rolls for controlling the operation and storage of the belt or mat can also be arranged to the feeding table or in connection therewith.

In addition, one or more support arrangements may be arranged to the feeding table. The feeding table support connected to the feeding table comprises a bottom part 1-18a and top part 1-18b of the support. Either part may be nested inside the other. The bottom part of the support connects at its bottom end to the base or body of the feeding table with screws or bolts, for example, and the top part of the support connects at its top end to the feeding table through a lug 1-52 of the feeding table with screws or bolts, for example, and the lug may be at a distance from the feeding plane 1-22c. The telescopic arm may be arranged to a specific length, and the telescope may remain in place with locking pins or a latch during lifting. When the feeding table is set into its transport position, the pin or latch may be removed and the support released to move into the transport position length. After this, the support can again be locked. Alternatively, the support of the feeding table comprises telescopic inner and outer pipes, and during the first movement of a cylinder element, the inner pipe supports itself close to the first fastening point of the feeding table support inside the outer pipe, in other words, the inner pipe extends to the end of the outer pipe on the feeding table body side and, thus, supports the feeding plane. Therefore, the top support may be dimensioned in such a manner that the table is adjusted with lugs to be horizontal when the slot of the bottom end of the pipe is against the pin.

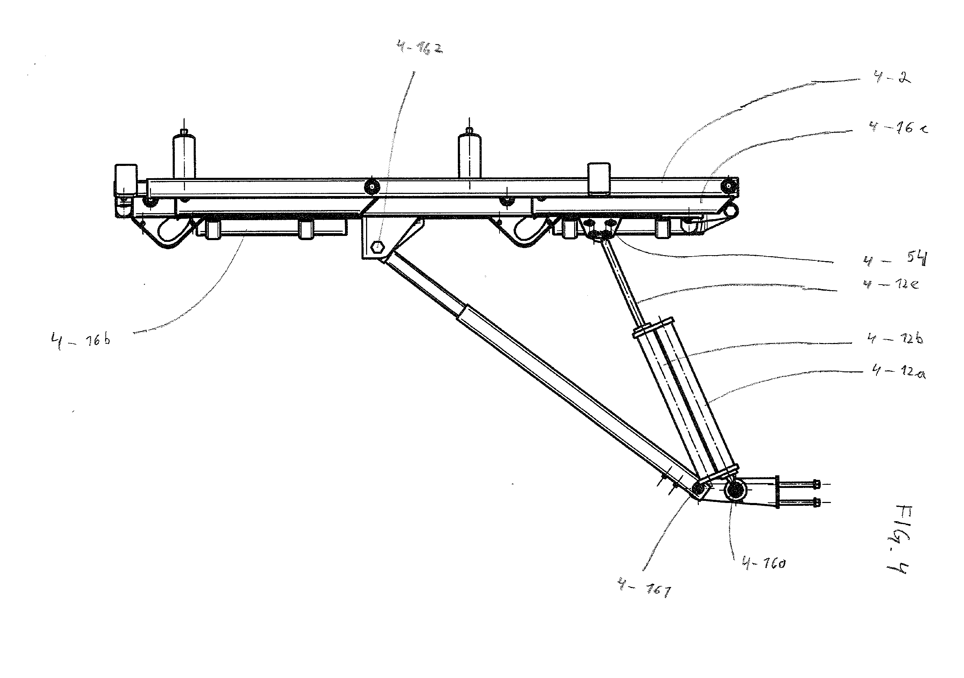

The support of the feeding table, which is connected rotatably from its first end to the body at the first fastening point 4-161 (Figure 4) and from its second end to the feeding plane at the second fastening point 4-162 (Figure 4), is arranged to keep the distance between the first 4-161 and second 4-162 fastening points essentially constant during the first movement of the cylinder member and to allow the distance between the first and second fastening points to change during the second movement of the cylinder member. In other words, during the lifting and lowering movements, the support remains at essentially the predefined length, and during setting into the transport position, the support extends telescopically, whereas during setting into the use position, the inner arm of the support moves telescopically inside the outer arm of the support.

The support of the feeding table may be connected at its other end to the feeding plane between the third point 1-45a and fourth point 1-45b of the feeding plane.

The length of the feeding table and lifting device from the roll 1-48 to the edge of the body 1-50 may be approximately 1850 mm, for instance.

The elements of the lifting device or feeding table may be fastened with various fixed, adjustable, screwing, or rotating fastening elements, such as lugs, bolts, screws, nuts, levers, cams, drums, wires, and/or plates.

The body or base 1-50 of the feeding table may be fastened to the wood splitting machine in a fixed or detachable manner by bolts, for instance, that fix the lifting device of the feeding table and the feeding table to the body of the wood splitting machine. Thus, the body of the lifting device and/or feeding table can depict the support point of the bottom support of the table which is fastened to the body of the wood splitting machine, and therefore lets the lifting device and/or feeding table support against the wood splitting machine through it. Thus, the feeding table does not support itself or need to be fastened to the ground, nor does it require even ground. The feeding table may in addition to or instead of the above be arranged to be fastened rotatably to the wood splitting machine close to the fourth point 1-45b of the feeding plane 1-22c by means of a bracket 1-46 of the feeding table, for example. The fastening may take place during manufacturing or later. When the feeding table and/or lifting device is fastened to the wood splitting machine, they are not dependent on the evenness of the ground, they always accompany the machine and are immediately ready to use. Thus, the feeding table and/or lifting device may be part of the wood splitting machine, or an accessory and fastened to the feeding table of the wood splitting machine, for example.

In the method for controlling the lifting device, the operation of the lifting device is controlled by an actuator. The actuator may be a cylinder, for example. The cylinder may be a single-acting or double-acting cylinder with passing piston rods, or a differential cylinder. The first end of the cylinder member in Figure 1 is connected rotatably to the body 1-50 and its other end is connected rotatably to the second swing 1-16c, 1-16d. The cylinder member or cylinder element has two cylinder pipes 1-12a, 1-12b that both have piston rods inside. The drive member may also be one or more cylinders that are the same hydraulic cylinders as used in lifting the wood with the lifting device on the feeding table and moving the table and/or lifting device into transport position. The cylinder may be a tandem model that is run in two parts from one end to the other. The cylinder may also be a one-piece model.

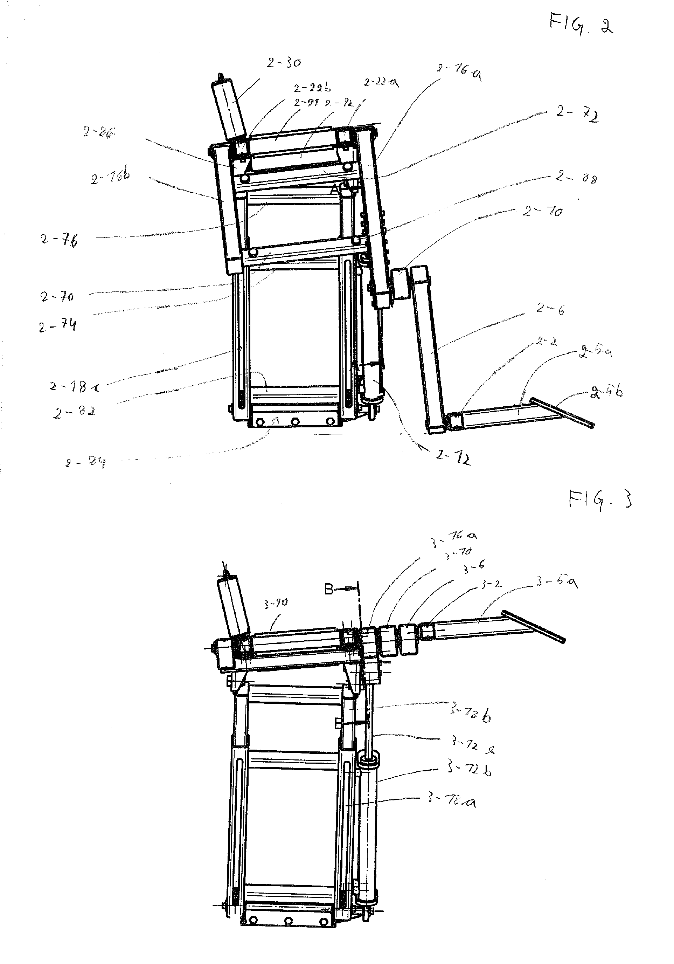

When the lifting device is in place in its bottom position, both piston rods are in the cylinder pipe. When the bottom beam of the lifting device is raised, the second piston rod is run to the end until the stroke is finished. In other words, the cylinder is run from its short position to its long position or from its first position to its first extended or extendable position. The bottom beam and lifting fork are then at their top positions. If the lifting device and/or feeding table is to be transferred from the top position of the bottom beam to the transport position, the second piston rod of the cylinder must be run to the end, that is, a second stroke must be performed, that is, the cylinder is must also be run from its first position or first extendable position to its second position or long position. The first stroke can be an upward stroke, as shown in Figures 3 and 4. The second stroke can then be a downward stroke. Alternatively, the first stroke can be a downward stroke and the second an upward stroke. According to yet another alternative, the first stroke can be provided by running the piston rod to a specific predefined first length and the second stroke by running the piston rod to a specific predefined second length or final length. After the first stroke, the bottom beam and lifting device have moved up, and after the second stroke, the lifting device and/or feeding table have moved to the transport position. Between strokes, the locating point of the stroke can be changed. For instance, the length of the first stroke may be approximately 450 mm and the length of the second stroke approximately 350 mm, whereby the length of the combined stroke is approximately 800 mm. The movement stops or it may be stopped for instance when the cylinder stroke is finished and/or stopping elements, such as rubber stoppers, in the swings hit the feeding table.

As described above, in the wood lifting step, the lifting device of the feeding table is started and the cylinder 1-12a, 1-12b begins its stroke. The cylinder supports itself at its first end against point 4-160 (Figure 4) and at its second end against point 4-54, 1-54 (Figures 4 and 1, respectively). The piston rod rises from the first cylinder pipe 1-12b and lifts the first swing 1-16c, 1-16b and, through the horizontal beam 1-10, the second swing 1-16a, 1-16b. In Figure 1, the swings turn clockwise, whereas the lifting arms 1-6a, 1-6b pivoted to the horizontal beam turn counter-clockwise forced by the cogwheel arrangement. The first ends 1-43a, 1-43b of the swings turn toward the feeding plane during lifting. Because the swings turn in one direction and the lifting arms in another, opposite direction, the bottom beam rises substantially vertically upward, level or in parallel to the feeding table during the entire lifting. During lifting, the feeding table support supports the feeding table. When the lift is finished, lifting ends. The stoppers arranged to the support elements of the swings hit the bottom plane of the feeding table and lifting stops or is stopped.

During lifting, in response to the first movement of the cylinder member from the short position to the first extended position, the bottom beam is arranged to move from its first position, in which the bottom beam is substantially parallel to the feeding plane and at a distance from the feeding plane, to the second position, in which the bottom beam is substantially parallel to the feeding plane and beside it. In response to the second movement of the cylinder member from the first extended position to the second position or the second extended position, the bottom beam and feeding plane are arranged to move to a position that is substantially perpendicular to the position produced by the first movement of the cylinder member. Thus, if the feeding table of the wood splitting machine has to be lifted upright for transport, the lifting device of wood also rises with the feeding table into the transport position.

The extent of lift can be calculated from the movement of the swings, for instance. When the lifting device is down, the angle between the swings and horizontal beam is about 60 degrees. Lifting ends when the angle is about zero degrees. Instead of or in addition to this, the extent of lift can also be calculated from one or more other angles, extent of lift and/or time.

To describe the lifting and structure in other words, the axis of the lifting arm 1-6a runs through a hole 1-44a in the lifting arm and through a hole at a corresponding point of the horizontal beam 1-10. A semi-circular groove with a cogwheel behind it is arranged or machined into the swing. The cogwheel arrangement forces the lifting arm 1-6a to turn counter-clockwise, when the swing runs and turns clockwise, as seen from the front. When the cylinder has finished its first stroke, for instance a minus stroke, the swing has turned around a predefined angle, for instance about 60 degrees, to be substantially horizontal. The lifting device is then in its up position and beside the feeding plane, and wood can be transferred to the conveyor. It should be noted that the arms of the swing and lifting arm are substantially equal in length and that all the swing arms are substantially equal in length and the lifting device arms are substantially equal in length.

When the lifting device is lowered, the cylinder produces a stroke in the other direction, for instance a plus stroke from full length to short length. The pull directed by the cylinder to the fastening point of the feeding table of the cylinder turns the swings counter-clockwise. The cogwheel casing of the swings forces the lifting arms to turn clockwise as seen from the front, and the fork comes downward to a predefined extent.

Figure 2 shows the feeding table from the incoming direction of the wood and with the lifting device down. The first piece of wood to be moved along the ramp 2-5b of the fork can be rolled to the arm 2-5a of the fork that is fastened to the bottom beam 2-2. The bottom beam is pivoted to the lifting arm 2-6 that in turn is pivoted to the horizontal beam 2-10. The horizontal beam and one or more arms 2-16a, 2-16b of the swing are operationally connected to each other. The swing may have one or more arm support elements 2-70, 2-72. Figure 2 also shows a body 2-84 of the feeding table and a support element 2-82, 2-74 of the lower part of the feeding table support and a support element 2-76 of the upper part. There may also be more support elements than shown in Figure 2. A vertical roll 2-30 may prevent the wood lifted onto the belt from falling behind the feeding table and help the wood move on the belt. Figure 2 also shows a support roll 2-91 for the back end of the wood, a mat control roll 2-92, wood support roll pipes 2-22a, 2-22b, and a bottom support lug 2-86.

As shown in Figure 2, the lifting device and/or feeding table may be in an oblique position to the feeding table support and/or body. The obliqueness may be provided for instance to keep the material being lifted better in the fork during lifting.

When the lifting device is in its down position, the height of the feeding table from the bottom surface of the lifting arm to the top surface of the vertical roll may be approximately 1090 mm, for instance, and the height from the top surface of the fork to the top surface of the conveyor belt may be approximately 890 mm, for instance. The tilt angle between the feeding table support and swing arm may be approximately 3 to 15 degrees, for instance approximately 6 degrees. When the lifting device is in its top position, the height of the feeding table from the bottom surface of the base to the top surface of the vertical roll may be approximately 1060 mm, for instance.

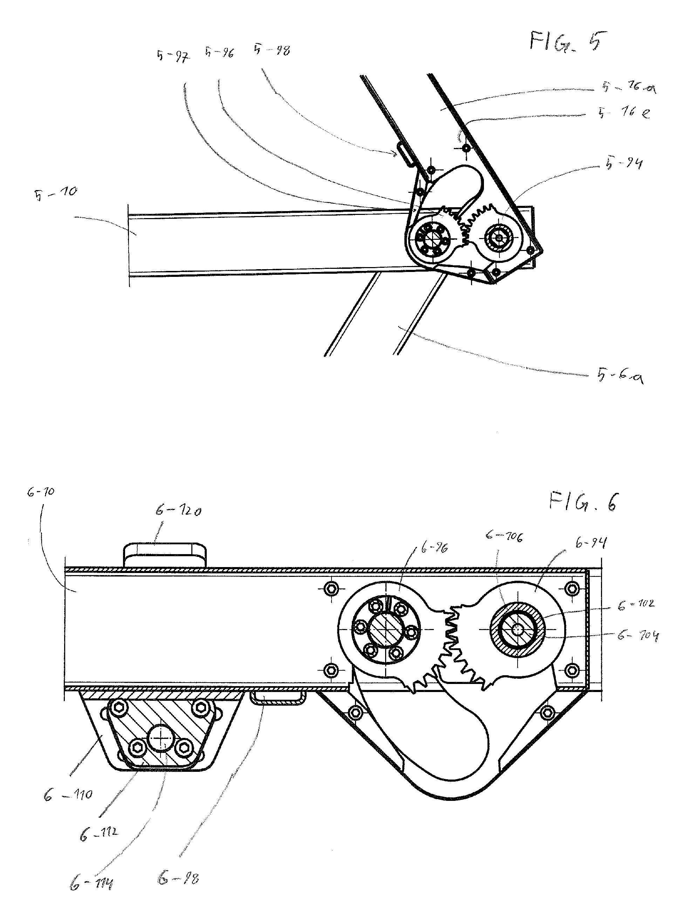

Figure 2 also shows a cut A-A which is described in more detail in Figure 5. The cut shows a section of the horizontal beam with the cogwheel arrangement of the invention and its preferred embodiments.

Figure 3 shows the feeding table as seen from the incoming direction of wood. In Figure 3, the lifting device is in its top position. In this position the wood is lifted up and can be rolled or moved from the fork to the conveyor 3-90. The fork arm 3-5a, bottom beam 3-2, lifting arm 3-6, horizontal beam 3-10, swing arm 3-16a, and conveyor are all substantially aligned.

When the lifting arm is in the top position, the cylinder has finished its first stroke, and the piston rod 3-12e has extended from the cylinder pipe 3-12a a predefined distance or its full distance. Figure 3 also shows the bottom part 3-18a and top part 3-18b of the feeding table support. The top part of the support may be an extension arm, the length of which may be adjusted telescopically or the length of which is adjustable and fixable by a pin, for instance, to a given dimension.

Figure 3 also shows a cut B-B that is described in more detail in Figure 6. The cut shows a section of the horizontal beam with the cogwheel arrangement of the invention and its preferred embodiments.

Figure 4 is a front view of the feeding table with the lifting device up. The cylinder 4-12a, 4-12b has finished one stroke, as a result of which the piston rod 4-12e has extended from the cylinder pipe and at the same time made the lifting device rise to its top position to the feeding level. According to Figure 4, the cylinder is supported at its bottom end to a support point 4-160 that may be in the body, in feeding table base, for instance, and at its top end to a support point 4-54 that may be in the second swing 4-16c, for instance. Figure 4 also shows the bottom beam 4-2 in its top position, and the second swing 4-16b.

According to Figure 4, between fulcrums, that is, between the fulcrum 4-160 and lug 4-54, only one actuator is arranged to provide movement from the transport position to the use position, operation of the device, and movement from the use position to the transport position. The actuator may be a cylinder, for instance, that is divided into two steps or moves.

Figure 5 shows a partial cut or enlargement A-A (Figure 2) at a ratio of approximately 1:5 as seen from inside the device toward the working direction. In Figure 5, the lifting device is in its down position. Both the lifting arm 5-6a and the swing arm 5-16a are at a predefined idle state angle, for instance at a 50-, 55-, 59-, 60- or 63-degree, preferably about 60-degree angle to the horizontal beam. The angle degrees may also differ from each other.

The cogwheel arrangement comprises at least two cogwheels. The cogwheel 5-94 of the swing is a fixed cogwheel and the cogwheel 5-96 of the lifting device is a turnable, detachable cogwheel. The cogwheel of the swing may also be detachably attached to the swing. In Figure 5, the swing arm turns counter-clockwise during lifting. The cogwheel of the swing receives the teeth of the cogwheel of the lifting device. When the swing arm turns, the cogwheel of the lifting device turns and forces the lifting arm to move clockwise. Due to the cogwheel arrangement, the horizontal beam 5-10 remains horizontal during lifting and lowering. The cogwheels may be equidistant from each other. Figure 5 also shows a fastening screw 5-16e of a plate, a protective plate 5-97 and a bottom edge 5-98 of the horizontal pipe beam of the swing.

The fixed cogwheel 5-94 may be fastened to the swing arm by welding, for instance, and the cogwheel 5-96 may be fastened to the lifting arm with a bolt, for instance.

Figures 1, 5, and 6 show two cogwheel arrangements, one in connection with the swing and another with the lifting arm, but there may be one, two or more cogwheel arrangements in accordance with the invention and its preferred embodiments. The operational connection of the first lifting arm 1-6a and first swing 1-16a, 1-16b comprises a lifting arm cogwheel member 5-96, 6-96 formed in the first lifting arm 1-6a and a swing cogwheel member 5-94, 6-94 formed in the first swing 1-16a, 1-16b, while the teeth of the lifting arm cogwheel member 5-96, 6-96 and the swing cogwheel member 5-94, 6-94 are arranged to operate together, and/or the operational connection of the second lifting arm 1-6b and the second swing 1-16c, 1-16d comprises a lifting arm cogwheel member 5-96, 6-96 formed in the second lifting arm 1-6b and a swing cogwheel arrangement 5-94, 6-94 formed in the first swing 1-16c, 1-16d, while the teeth of the lifting arm cogwheel member 5-96, 6-96 and swing cogwheel member 5-94, 6-94 are arranged to operate together. The swing cogwheel member and/or lifting arm cogwheel member may have teeth on the rim at a predefined circumferential angle that is in the range of 45 to 120 degrees. The circumferential angle may be 39, 45, 55, 60, 68, 79, or 120 degrees, for example. The circumferential angle may also be 360 degrees.

Figure 6 shows a partial cut B-B (Figure 3) at a ratio of approximately 1:2.5 as seen at the swing from inside the device toward the working direction, when the lifting device is in the top position and the horizontal beam 6-10, lifting arm, and swing arm are substantially horizontal or level. In this position, the lifting arm and swing arm are turned approximately 60 degrees from their initial positions. In the top position, the cogwheel 6-96 of the lifting arm has moved to its second extreme position, whereas the cogwheel 6-94 of the swing has remained stationary and received the teeth of the lifting arm cogwheel. The figure shows a plate 6-102 of the swing cogwheel that belongs to the welding assembly of the swing and is welded to the sleeve. The sleeve is also welded to a tubular beam so as to keep the swing cogwheel rigidly or stationary fastened to the arm. Figure 6 also shows a pin 6-104 and axle 6-106. At the bottom surface of the horizontal beam of the swing, there is also a swing support arm 6-98 approximately 10 mm below the bottom surface.

Figure 6 shows a lug 6-110 fastened by welding, for example, to the swing, and a plate 6-112 with a hole 6-114. The hole also runs through the lug, and a cylinder pin may be arranged in the hole. The plate and the hole in it thus serve as a second fastening point of the cylinder. By moving the location of the cylinder pin and fine adjusting the location at the fastening point, it is possible to adjust the precision of the horizontal plane of the lifting of the fork and horizontal beam. Figure 6 also shows a levelling rod 6-120 behind the lifting device. The levelling rod prevents the wood on the machine from rolling off from the arm of the bottom beam.

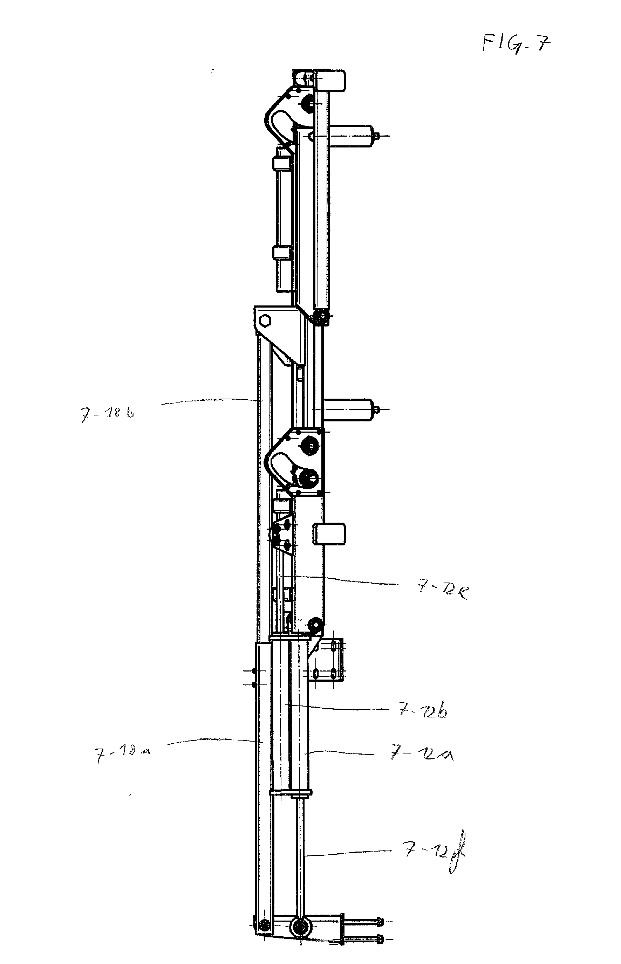

Figure 7 shows the feeding table in its transport position. The total length of the feeding table and conveyor may then be 2560 mm, for example, from the bottom surface of the body or base to the other end of the fork. The figure shows a pipe 7-12a of the first cylinder with a first piston rod 7-12f at its full length, and a pipe 7-12b of the second cylinder with a second piston rod 7-12e at its full length. The figure also shows the bottom part 7-18a of the feeding table support and an extension arm 7-18b extended from the bottom part.

According to the invention and its preferred embodiments, wood is lifted safely, substantially vertically straight up to the feeding table, and the lifting does not produce a dangerous curved lateral movement. Wood may be lifted onto the feeding table hydraulically, and the user or operator may control the lifting device up and down with a manually operated valve lever or remote control that may be connected to the manually operated valve lever.

The feeding table may be lifted and lowered to its transport and use position with the same hydraulic cylinder that is used to lift the trunks from the ground to the belt. After the table and lifting device have been lowered to their use position, they are immediately ready for use. It should also be noted that the feeding table and wood lifting device do not need to be supported to the ground but are supported to the body of the wood splitting machine at its bottom end by bolts, for instance, and/or at its top end by a bracket, for instance. Owing to this, the feeding table and lifting device are substantially level and any inclination of the ground does not matter.

The wood lifting device may be a fixed part of the feeding table, it may be fastened directly to the feeding table, or it may be detachably attachable to the feeding table. The lifting device may comprise any elements, structures, and actuators required in lifting. The feeding table may comprise only the elements, structures, and actuators, with which the lifting device may be made to operate according to the invention. The feeding table may also have elements, structures, and actuators, with which the lifted wood is made to move on the feeding table, made to be transported from the feeding table, or to be fed to the next step.

In the method of the invention, the material being processed, such as wood, is transported to the fork of the feeding table or lifting table lifting device by rolling or lifting, for example. After this, the fork is raised upward toward the feeding table. The lifting up and onto the feeding table may be done hydraulically or pneumatically, for instance. Alternatively, the lifting may be done by a spindle motor. It is also not necessary to detach or attach hydraulic pipes.

As stated above, integral to the work cycle, method, device, and system of the invention is that the lifting movement is substantially vertical. It should also be noted that the lifting device and lifting table, and the entire lifting table / transport unit is controllable to an upright transport position with the same one or more cylinders or actuators as the drive cylinder of the lifting device. In other words, the feeding table that rises substantially vertically in the working step may be placed into its transport position with the same or a different actuator. In addition, the feeding table may be moved from the transport position to the working position with the same or different actuator. Turning the feeding conveyor to the working and transport positions may be done hydraulically using a control column.

As described above, the operation of the entire lifting table may be divided into two or more steps. These may include placing goods into forks, lifting goods beside and onto the belt, and transporting goods on the belt. It is also possible to separate making the lifting table operative and into transportation or storage state.

The feeding table may use its own hydraulic motor and control, and/or the hydraulic force may be taken from the hydraulic motor of the wood splitting machine. The functions of the feeding table are controlled as part of the logic control of the wood splitting machine by using a microprocessor, for instance. Alternatively, the functions of the feeding table are controlled with a separate hydraulic spindle. The feeding table and lifting device may have logic control, whereby they may be operated automatically. Trouble-free continuous operation ensures a reasonable rate of making chopped wood.

The user may control and monitor the operation of the device on the display of the control panel. The display shows, among other things, the current operation of the device. The display may be connected to a processor, computer, and memory, and it is also possible to examine thereon other information on the operation of the device, such as the oil temperature of the device and pressures at different points, feed control, operating hour meter, the amount of wood fed for processing, for instance sawing, and the amount of sawed and chopped wood. The system may also have a log file, into which history information may be stored automatically. On the basis of the history information, data may be analysed later.

The drive mechanism of the device may be positioned centrally in such a manner that the user may easily reach it. The hydraulics blocks and electricity and electronics centre may all be arranged in the same place behind the front panel.

The feeding table may be controlled by a hand lever. Alternatively, it is possible to use microprocessor-controlled bus technology in controlling the feeding table. In such a case, other possibly used expensive electronic components and wiring may be left out. In addition, the device does not have many mechanical components. As a result, there are less malfunctions and the need for maintenance is reduced.

The controls and parameters of the lifting device and/or lifting table, and any entity the lifting device and/or lifting table are connected with may be programmed and set by program instead of or in addition to mechanical controls and settings. Setting by program may be done by selecting the settings electronically from the control panel. The user may choose automatic or manual use. Manual use is done with one electronic joystick. In automatic use, the user may only work with the wood lifting device. The device is capable of identifying a new piece of wood, so the device need not be started separately. When idling and downtimes are eliminated, the quantitative yield of the device is high.

Operational safety and ergonomics are taken into consideration in the entity formed by the invention and its embodiments and in the parts forming the entity. The devices are positioned inside a robust tubular body in a premeditated manner in view of installation and maintenance.

The lifting device and/or lifting table may lift trunks, logs, wood, and other material to be fed in and/or cut. The material may be dry, wet, of even quality, of uniform thickness, branchy, without branches, deformed, or with surface damage.

The different parts of the lifting device and lifting table may be made of different materials, such as steel, plastic, ceramic, or a combination of these. The body structure of the device is strong and it may consist of mainly RHS pipe, for example. The structure prevents the body from flexing even in extreme conditions. The steel may be stainless steel pipe or acid-proof steel. The different parts may be coated with different materials, such as paint, varnish, or protective coating. Instead of telescopic or fixed arms, it is possible to use sliding or turning arms, or combinations thereof. The different parts of the lifting device and/or feeding table may consist of two or more parts. For instance, there may be three or more swings, and there may be three or more lifting arms.

It should be noted that the entire wood splitting machine, chopping machine, or chopper may comprise several parts or blocks to lift the trunk of a tree on the belt for transport to a cutting device for cutting and on to a splitting device for splitting the cut piece of trunk and to a discharge device for discharging the split pieces of trunk from the wood splitting machine. Above, we describe a feeding table and lifting device that are fixed or detachably attachable parts of the forward end of the described entity.

Thus, the feeding table, lifting table, according to the invention and its preferred embodiments may be arranged to a conventional, semi-automatic, or fully automatic chopper. Said lifting device and feeding table may also be used in other systems that require a substantially vertically directed lifting movement and in which, if necessary, the lifting device and feeding table may be lifted into a transport and storage position with the same actuator as that used to lift the lifting device and/or feeding table during operation.

The operation of the feeding table and lifting device may be arranged in such a manner that when feeding, processing, and chopping approximately 4-m long trees, the system rate is about 60 pieces of wood per hour, when the trees are cut into approximately 33-cm long pieces.

The device, system, and method of the invention provide an automatic, safe, fast, and reliable machine with as little downtime as possible.

It will be obvious to a person skilled in the art that, as technology advances, the basic idea of the invention may be implemented in many different ways. The invention and its embodiments are thus not restricted to the examples described above, but may vary within the scope of the claims.

## Claims

1. A device for a wood splitting machine, **characterised in that** it comprises:
― a body (1-50);
― a feeding plane (1-22c);
― a horizontal beam (1-10, 2-10, 3-10, 5-10, 6-10);
― a bottom beam (1-2a, 2-2, 3-2, 4-2);
― a first lifting arm (1-6a) and a second lifting arm (1-6b);
― a first swing (1-16a, 1-16b) and a second swing (1-16c, 1-16d);
― a cylinder member (1-12a, 1-12b, 2-12, 3-12b, 3-12e, 4-12a, 4-12b, 4-12e, 7-12a, 7-12b, 7-12e, 7-12f) with a first end connected rotatably to the body (1-50) and a second end connected rotatably to the second swing (1-16c, 1-16d); wherein
― the first swing (1-16a, 1-16b) is connected rotatably from its first end to the horizontal beam (1-10, 2-10, 3-10, 5-10, 6-10) and from its second end to the feeding plane (1-22c);
― the second swing (1-16c, 1-16d) is connected rotatably from its first end to the horizontal beam (1-10, 2-10, 3-10, 5-10, 6-10) and from its second end to the feeding plane (1-22c);
― the first lifting arm (1-6a) is connected rotatably from its first end to a bottom beam (1-2a, 2-2, 3-2, 4-2) and from its second end to the horizontal beam (1-10, 2-10, 3-10, 5-10, 6-10);
― the second lifting arm (1-6b) is connected rotatably from its first end to the bottom beam (1-2a, 2-2, 3-2, 4-2) and from its second end to the horizontal beam (1-10, 2-10, 3-10, 5-10, 6-10); and wherein
― the first lifting arm (1-6a) and first swing (1-16a, 1-16b) and/or second lifting arm (1-6b) and second swing (1-16c, 1-16d) are operationally connected to each other in such a manner that
― in response to the first movement of the cylinder member (1-12a, 1-12b, 2-12, 3-12b, 3-12e, 4-12a, 4-12b, 4-12e, 7-12a, 7-12b, 7-12e, 7-12f) from its short position to its first extended position, the bottom beam (1-2a, 2-2, 3-2, 4-2) is arranged to move from its first position, in which the bottom beam (1-2a, 2-2, 3-2, 4-2) is substantially parallel to the feeding plane (1-22c) and at a distance from the feeding plane (1-22c) to its second position, in which the bottom beam (1-2a, 2-2, 3-2, 4-2) is substantially parallel to the feeding plane (1-22c) and beside the feeding plane (1-22c); and
― in response to the second movement of the cylinder member (1-12a, 1-12b, 2-12, 3-12b, 3-12e, 4-12a, 4-12b, 4-12e, 7-12a, 7-12b, 7-12e, 7-12f) from its first extended position to its second extended position, the bottom beam (1-2a, 2-2, 3-2, 4-2) and feeding plane (1-22c) are arranged to move to a position that is substantially perpendicular to the position of the cylinder member (1-12a, 1-12b, 2-12, 3-12b, 3-12e, 4-12a, 4-12b, 4-12e, 7-12a, 7-12b, 7-12e, 7-12f) produced by the first movement.

2. A device as claimed in claim 1, **characterised in that** the bottom beam (1-2a, 2-2, 3-2, 4-2) is arranged to remain substantially parallel to the feeding plane (1-22c) when moving from the first position to the second position.

3. A device as claimed in claim 1 or 2, **characterised in that** it also comprises a feeding table support (1-18a, 1-18b, 2-18c, 3-18a, 3-18b, 7-18a, 7-18b) that is connected rotatably from its first end to the body (1-50) at a first fastening point (4-161) and from its second end to the feeding plane (1-22c) at a second fastening point (4-162) and which support is arranged during the first movement of the cylinder member to maintain the distance between the first fastening point (4-161) and second fastening point (4-162) constant and during the second movement of the cylinder member to allow the distance between the first and second fastening points to change.

4. A device as claimed in claim 3, **characterised in that** the feeding table support (1-18a, 1-18b, 2-18c, 3-18a, 3-18b, 7-18a, 7-18b) comprises a telescopic inner pipe (1-18b) and outer pipe (1-18a), and during the first movement of the cylinder member, the inner pipe (1-18b) supports itself close to the first fastening point (4-161) of the feeding table support inside the outer pipe.

5. A device as claimed in any one of claims 1 to 4, **characterised in that** the feeding table support (1-18a, 1-18b, 2-18c, 3-18a, 3-18b, 7-18a, 7-18b) is connected from one end to the feeding plane (1-22c), between the third point (1-45a) and fourth point (1-45b) of the feeding plane.

6. A device as claimed in any one of claims 1 to 5, **characterised in that** the bottom beam (1-2a, 2-2, 3-2, 4-2) is connected rotatably from its first point (1-41) to the first end of the first lifting arm (1-6a) and from its second point (1-42) to the first end of the second lifting arm (1-6b), in which the first point (1-41) and second point (1-42) are at a distance from each other.

7. A device as claimed in any one of claims 1 to 6, **characterised in that** the feeding table is arranged to be connected rotatably to the wood splitting machine close to the fourth point (1-45b) of the feeding plane (1-22c) and/or the feeding table is arranged to be fixed to the wood splitting machine at the body (1-50) of the feeding table.

8. A device as claimed in claim 7, **characterised in that** the feeding table is connected rotatably to the wood splitting machine, and the fastening point of the feeding table to the wood splitting machine is a bracket (1-46) of the feeding table and/or the body (1-50) of the feeding table.

9. A device as claimed in any one of the claims 1 to 8, **characterised in that** the operational connection of the first lifting arm (1-6a) and first swing (1-16a, 1-16b) comprises a lifting arm cogwheel member (5-96, 6-96) formed in the first lifting arm (1-6a) and a swing cogwheel member (5-94, 6-94) formed in the first swing (1-16a, 1-16b), while the teeth of the lifting arm cogwheel member (5-96, 6-96) and the swing cogwheel member (5-94, 6-94) are arranged to operate together, and/or the operational connection of the second lifting arm (1-6b) and the second swing (1-16c, 1-16d) comprises a lifting arm cogwheel member (5-96, 6-96) formed in the second lifting arm (1-6b) and a swing cogwheel arrangement (5-94, 6-94) formed in the first swing (1-16c, 1-16d), while the teeth of the lifting arm cogwheel member (5-96, 6-96) and swing cogwheel member (5-94, 6-94) are arranged to operate together.

10. A device as claimed in claim 9, **characterised in that** the swing cogwheel member (5-94, 6-94) and/or lifting arm cogwheel member (5-96, 6-96) have teeth on the rim of the member at a predefined circumferential angle that is in the range of 45 to 120 degrees.

11. A wood splitting machine, **characterised in that** it comprises the device as claimed in any one of claims 1 to 10.
